# EUROPÄISCHE PATENTSCHRIFT

(11) **EP 2 391 974 B1**
(45) Veröffentlichungstag und Bekanntmachung des Hinweises auf die Patenterteilung: **04.10.2017**
(21) Anmeldenummer: 10701151.2
(22) Anmeldetag: 26.01.2010
(51) Int. Cl.: G06K 19/077

(54) **DATENTRÄGERANORDNUNG**
DATA CARRIER ARRANGEMENT
AGENCEMENT DE SUPPORT DE DONNÉES

(30) Priorität: 27.01.2009 DE 102009006341
(43) Veröffentlichungstag der Anmeldung: 07.12.2011
(73) Patentinhaber: Giesecke+Devrient Mobile Security GmbH, 81677 München (DE)
(72) Erfinder: HEUSMANN, Hans, 82281 Egenhofen (DE); OJSTER, Albert, 82031 Grünwald (DE)
(86) Internationale Anmeldenummer: PCT/EP2010/050836
(87) Internationale Veröffentlichungsnummer: WO 2010/086293

(56) Entgegenhaltungen:
- EP-A1- 0 869 452
- EP-A1- 1 117 063
- WO-A1-02/35467
- DE-A1- 19 921 525
- FR-A1- 2 853 434

## Beschreibung

Die Erfindung geht aus von einer Datenträgeranordnung, wie sie aus der EP 1117063 A1 bekannt ist. Daraus ist eine Datenträgeranordnung bestehend aus einer IC-Karte mit einer Ausnehmung und einer in der Ausnehmung plazierten SIM-Karte entnehmbar, wobei die Ausnehmung erzeugt wird, indem in die IC-Karte ein Durchbruch eingebracht und dieser anschließend mit einer zum Durchbruchsinneren hin klebenden Schicht unterlegt wird. Die Kleberschicht hält die SIM-Karte in der Ausnehmung. Die Lösung bewirkt, daß Biege- und Torsionskräfte von der IC-Trägerkarte nicht auf die SIM-Karte übertragen werden und erleichtert dadurch das Trennen der SIM-Karte von der IC-Trägerkarte. Allerdings bilden das Aufbringen des Trägerfilms auf die Rückseite und das Einsetzen der SIM-Karte in die damit geschaffene Ausnehmung aufwendige Verfahrensschritte, die die Kosten erhöhen.

Aus FR 2853434 A1, die als nächstliegender Stand der Technik gesehen wird, ist eine elektronische Mikroschaltkreiskarte bekannt, die reversibel in einen Träger eingesetzt werden kann. Die Mikroschaltkreiskarte ist insbesondere eine SIM-Karte, der Träger kann insbesondere eine Standardkarte im ID-1 Format sein oder ein Schlüssel in Tokenform. Die Mikroschaltkreiskarte besitzt zumindest die gleiche Biegsamkeit wie der Träger, so dass sie im eingesetzten Zustand nicht beschädigt wird, wenn der Träger gebogen wird. Das lösbare Verbinden erfolgt durch Verklemmen oder Verklipsen. Das Trennen der Mikroschaltkreiskarte von dem Träger geschieht mittels eines Werkzeuges oder durch Herausdrücken aus einem hierzu in dem Träger vorgesehenen Durchbruch.

Aus der EP 869 452 A1 ist weiter eine Datenträgeranordnung bekannt, die aus einem flachen Träger mit einer Ausnehmung und einer Minichipkarte besteht. Die Minichipkarte wird unabhängig von dem Träger hergestellt. Die Ränder der Minichipkarte und entsprechend die Wandungen der Ausnehmung in dem Träger sind abgeschrägt. Dadurch wird der Zusammenbau von Träger und Minichipkarte unempfindlich gegen Fertigungstoleranzen. Zur Befestigung der Minichipkarte in dem Träger ist an der Unterseite der Minichipkarte ein Doppelklebeband vorgesehen, das zu der Minichipkarte hin eine höhere Klebekraft aufweist als zu dem Träger. Die Anordnung des doppelseitigen Klebebandes erlaubt es, eine Minichipkarte von einem Träger zu lösen und mit einem anderen Träger zu verbinden.

Aufgabe der Erfindung ist es eine Datenträgeranordnung anzugeben, die kostengünstig auf einem Träger einen kleineren elektronischen Datenträger bereitstellt, wobei die gesamte Datenträgeranordnung wie ein Datenträger im Format des Trägers gehandhabt werden kann.

Die Aufgabe wird gelöst durch eine Datenträgeranordnung mit den Merkmalen des Hauptanspruchs. Die Aufgabe wird weiterhin gelöst durch ein Verfahren mit den Merkmalen eines der unabhängigen Ansprüche 10 oder 11.

Die erfindungsgemäße Lösung beruht auf dem Ansatz, einen biegsamen elektronischen Datenträger einzusetzen, der, um ihn mit dem Träger zu verbinden, in eine in dem steifen Träger geschaffene Ausnehmung abgerollt wird. Es ist dadurch möglich, eine haftende Unterlage, die den elektronischen Datenträger trägt und den elektronischen Datenträger selbst in einem Arbeitsdurchgang mit dem Träger zu verbinden. Die resultierende erfindungsgemäße Datenträgeranordnung gemäß dem Hauptanspruch hat den Vorteil, daß er in einer Maschine bearbeitet - z.B. personalisiert - werden kann, die auf die Verarbeitung von Datenträgern im Format des Trägers ausgelegt ist. Die Datenträgeranordnung läßt sich kostengünstig herstellen, da in den Träger nur ein Durchbruch eingebracht werden muß und die Anforderungen an die Genauigkeit dabei nicht zu hoch sind. Vorteilhaft können die elektronischen Datenträger auf einer Rolle bereitgestellt werden, wodurch der Umgang damit und das Verbinden mit Trägern vereinfacht werden. Derselbe Träger läßt sich ferner vorteilhaft, zumindest in einem gewissen Rahmen, für elektronische Datenträger mit unterschiedlichen Außenabmessungen einsetzen. In vorteilhafter Weise kann die Datenträgeranordnung ohne weitere Bearbeitung auch an Endnutzer weitergegeben werden. Die gleichen Vorteile bietet die erfindungsgemäße Variante gemäß dem unabhängigen Anspruch 11, wobei statt eines Durchbruchs auf bekannte Weise eine Ausnehmung in den Träger eingebracht wird. Die zweite Ausführungsform unterstützt in besonderem Maße die Verarbeitung der Datenträgeranordnung in einer auf Datenträger im Format des Trägers eingerichteten Maschine, indem sie den Spalt zwischen elektronischem Datenträger und Träger vollständig luftdicht verschließt, dabei aber dennoch die Möglichkeit bietet, die Oberfläche des elektronischen Datenträgers unmittelbar zu bearbeiteten, um diesen z.B. optisch zu personalisieren.

Unter Bezugnahme auf die Zeichnung werden nachfolgend Ausführungsbeispiele der Erfindung näher erläutert.

Es zeigen:
- Fig. 1: die Bestandteile einer Datenträgeranordnung gemäß einem ersten Ausführungsbeispiel im Querschnitt und zum Teil in Aufsicht,
- Fig. 2: die Bereitstellung eines elektronischen Datenträgers auf einer Trans-portfolie über einem Träger im Querschnitt,
- Fig. 3: das Abrollen einer Transportfolie mit darauf befindlichem elektroni-schen Datenträger, um diesen mit dem Träger zu verbinden,
- Fig. 4: eine Datenträgeranordnung nach dem Einbringen des elektronischen Datenträgers in den Träger in Aufsichten von der Oberseite und von der Unterseite,
- Fig. 5: eine Ausführungsform eines Trägers gemäß einem zweiten Ausfüh-rungsbeispiel,
- Fig. 6: das Abrollen eines elektronischen Datenträgers zum Einbringen in einen Träger,
- Fig. 7: eine Datenträgeranordnung gemäß dem zweiten Ausführungsbei-spiel nach Einbringen des elektronischen Datenträgers in den Träger in Aufsicht,
- Fig. 8: das Aufbringen einer Abdeckung auf die Oberseite einer Datenträ-geranordnung,
- Fig. 9: eine Datenträgeranordnung gemäß dem zweiten Ausführungsbei-spiel nach Aufbringen der Abdeckung in Aufsicht,
- Fig. 10: eine durch Kombination der beiden Ausführungsbeispiele erhaltene Datenträgeranordnung, und
- Fig. 11: eine Variante für das Einsetzen eines elektronischen Datenträgers in einen Träger.

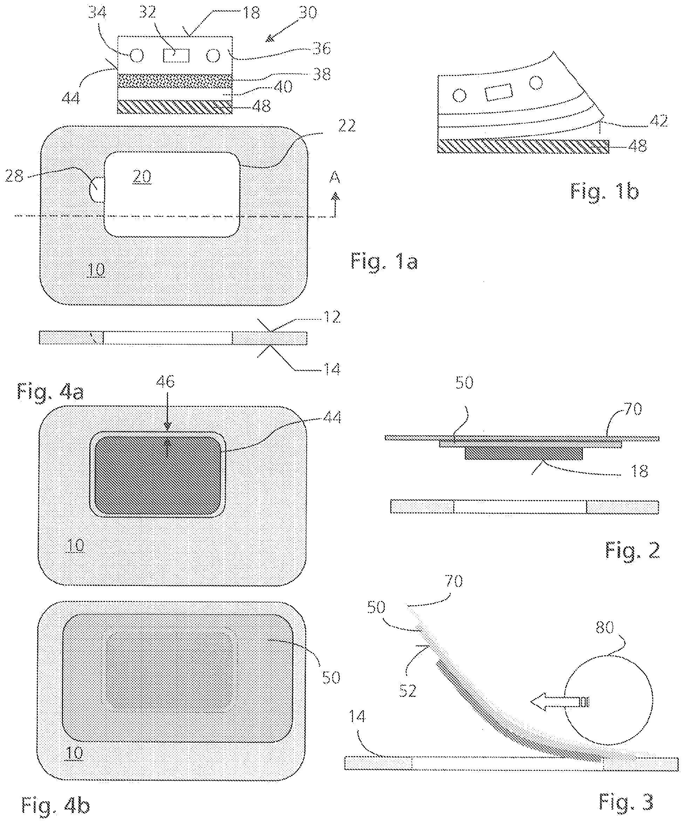

Fig. 1 zeigt in Aufsicht und darunter in einem Querschnitt entlang der Linie A einen erfindungsgemäßen Träger 10, in den durch Stanzen, Schneiden oder Fräsen ein Durchbruch 20 eingebracht ist. Wie auch für alle weiteren Figuren gilt, daß die gezeigten Maße und Proportionen nur zum Zwecke einer besseren Veranschaulichung gewählt wurden und nicht als konkrete Vorgaben zu verstehen sind. Der Träger 20 ist als flacher Körper mit einer Oberseite 12 und einer Unterseite 14 gestaltet und besteht aus einem steifen Material, das nur leichte Biegungen mit Biegewinkeln von nicht mehr als 45° gestattet. Im nachfolgend zugrundegelegten Ausführungsbeispiel wird der Träger 10 von einem Kartenkörper im ISO-Format gebildet, wie er zur Herstellung von Chipkarten eingesetzt wird. Er besitzt dessen Außenmaße und dessen Dicke. Der Träger 10 wird deshalb nachfolgend als Transportkarte bezeichnet. Der Durchbruch 20 ist so gestaltet, daß darin ein flacher elektronischer Datenträger 30 vollständig Platz findet, wie er oberhalb der Aufsicht auf die Transportkarte 10 im Querschnitt dargestellt ist; die dargestellten Größenverhältnisse sind dabei nicht maßstäblich zu verstehen. Die Außenkontur 44 des elektronischen Datenträgers 30 besitzt zweckmäßig, wie in Fig. 4 angedeutet, dieselbe Form wie die Innenkontur 22 des Durchbruchs 20. Beispielsweise kann der elektronische Datenträger 30 Außenabmessungen besitzen, die etwa einer SIM-Karte entsprechen; ohne weiteres kann er aber auch eine Randkontur 44 mit einer ganz anderen Geometrie aufweisen, die dabei auch von der Innenkontur 22 des Durchbruchs 20 abweichen kann. So kann z.B. ein elektronischer Datenträger 30 mit abgerundeten Ecken in einem Durchbruch 20 mit der Form eines Rechtecks plaziert werden.

Der elektronische Datenträger 30 trägt einen integrierten Schaltkreis 32 sowie eine damit verbundene Schnittstelle 32 zur Kommunikation mit einem Lesegerät, die insbesondere, wie in Fig. 1 angedeutet, kontaktlos ausgeführt sein kann und die Gestalt einer Antenne besitzt; ohne weiteres kommen aber auch andere Ausführungen der Schnittstelle 32 in Betracht, etwa eine kontaktbehaftete in Gestalt eines zu der sichtbaren Oberfläche 18 des elektronischen Datenträgers 30 hin angeordneten Kontaktfeldes. Wie in Fig. 1b veranschaulicht, ist der elektronische Datenträger 30, im Unterschied zu der Transportkarte 10, aus einem flexiblen Material gefertigt, das einen kleineren Elastizitätsmodul besitzt als das für die Transportkarte 10 verwendete Material. Der elektronische Datenträger 30 erlaubt daher ein deutliches Verbiegen mit Biegewinkeln von 90° und mehr und kann ohne weiteres auch in einer Endposition auf einer gekrümmten Grundlage angeordnet werden. Die Höhe des elektronischen Datenträgers 30 ist so auf die Dicke der Transportkarte 10 bzw. der in der Transportkarte 10 vorhandenen Ausnehmung 120 abgestimmt, daß ein aus Transportkarte 10 und eingesetztem Datenträger 30 bestehendes Ensemble in Maschinen gehandhabt und bearbeitet werden kann, die eigentlich zur Verarbeitung von Datenträgern mit den Abmessungen einer Transportkarte 10 eingerichtet sind. Zweckmäßig entspricht die Höhe des elektronischen Datenträgers 30 genau oder bis auf eine geringe zulässige Abweichung der Dicke der Transportkarte 10. Ein leichtes Herausragen oder eine geringfüge Versenkung gegenüber der Oberfläche der Transportkarte 10 sind aber häufig möglich. Bei dem elektronischen Datenträger 30 kann es sich z.B. um eine als Sticker oder Etikett ausgeführte, kontaktlos kommunizierende IC-Karte handeln, die auf einem Handy angebracht wird, um eine NFC-Transaktion zu ermöglichen.

Der elektronische Datenträger 30 weist mehrere Schichten auf. In einer ersten Schicht 36 sind der integrierte Schaltkreis 32, die Antenne 34 sowie ggf. vorhandene weitere Bauelemente angeordnet. Unter der Schicht 36 liegt, gesehen von der sichtbaren Oberfläche 18 her, eine Ferritschicht 38, darunter eine selbsthaftende Schicht 40, die zur Unterseite 42 hin klebt. Die selbsthaftende Schicht 40 ist mit einer Schutzschicht 48 abgedeckt, die von der selbsthaftenden Schicht 40 lösbar ist. Die Schutzschicht 48 kann in einer Ausführungsvariante an ihrer Unterseite ihrerseits klebend ausgeführt sein. Die dargestellte Schichtfolge ist nicht verbindlich; es können weitere Schichten vorgesehen sein, wenn dies aus technischen Gründen erforderlich ist. Die Schutzschicht 48 und vor allem die Ferritschicht 38 können andererseits auch entfallen oder als Eigenschaft einer anderen Schicht realisiert sein. Die Schicht 36 kann einstückig ausgeführt sein oder aus mehreren Teilschichten bestehen.

Die Außenkontur 44 des elektronischen Datenträgers 30 entspricht zweckmäßig der Innenkontur 22 des Durchbruchs 20 in der Transportkarte 10, wird von dieser aber vorzugsweise vollständig unter Belassung eines Toleranzabstandes eingeschlossen, so daß im eingesetzten Zustand zwischen dem Außenrand 44 des elektronischen Datenträgers 30 und dem Innenrand 22 des Durchbruchs in der Transportkarte 10 umlaufend überall ein Restspalt 46 verbleibt. Die Zulässigkeit des Restspaltes 46 erleichtert das Plazieren des elektronischen Datenträgers 30 in dem Durchbruch 20 und erlaubt es zudem, elektronische Datenträger 30 mit unterschiedlichen Außenkonturen 44 in demselben Typ Transportkarte 10 zu plazieren. An einer geeigneten Stelle am Umfang der Innenkontur 22 des Durchbruchs 20 ist eine z.B. kugeloberflächensegmentartige Griffmulde 28 ausgebildet, die ein Untergreifen eines in dem Durchbruch 20 gelagerten elektronischen Datenträgers 30 mit einem Finger unterstützt.

Fig. 2 zeigt im Querschnitt entlang der Linie A einen Schnitt durch eine Transportkarte 10 wie sie in Fig. 1 dargestellt ist, sowie darüber eine Transportfolie 70, auf der lösbar eine Unterlage 50 und auf der wiederum lösbar ein elektronischer Datenträger 30 plaziert sind. Die Unterlage 50 ist vorzugsweise eine Folie, deren Dicke so gering ist, daß die Bearbeitung einer Transportkarte 10, auf die auf einer Seite einer Unterlage 50 aufgebracht ist, in einer Bearbeitungsmaschine, beispielsweise einer Personalisierungsstation, nicht beeinträchtigt wird. Die Unterlage 50 ist zumindest teilweise, vorzugsweise vollständig größer als die Öffnung des Durchbruchs 20, so daß die Unterlage den Durchbruch 20 im verbundenen Zustand vollständig überdeckt. Die Unterlage 50 ist an der der Transportkarte 10 zugewandten Seite 52 mit einer Kleberschicht versehen, an der der elektronische Datenträger 30 haftet. In der in Fig. 2 gezeigten Anordnung sitzt der elektronische Datenträger 30 so auf der Unterlage 50 bzw. auf der Transportfolie 70, daß seine sichtbaren Oberfläche 18 nach unten, d.h. zum Grund der Ausnehmung 20 hin weist. Er ist so auf der Unterlage 50 plaziert, daß bei Verbindung der aus Transportfolie 70 und dem elektronischen Datenträger 30 bestehenden Anordnung mit der Transportkarte 10 der elektronische Datenträger 30 in dem Durchbruch 20 zu liegen kommt und die Unterlage 50 die Öffnung des Durchbruchs 20 vollständig abdeckt.

Die Transportfolie 70 mit der Unterlage 50 und dem darauf befindlichen elektronischen Datenträger 30 kann einzeln für jede Transportkarte 10 bereitgestellt werden. Vorzugsweise handelt es sich bei der Transportfolie 70 aber um ein auf einer Rolle bereitgestelltes Band, auf dem in einer oder mehreren parallelen Reihen eine Vielzahl von elektronischen Datenträgern 30 angeordnet ist.

Für das Einbringen des elektronischen Datenträgers 30 in den Durchbruch 20 in der Transportkarte 10 wird die Transportfolie 70 über die Rückseite 14 der Transportkarte 12 abgerollt. Dieser Vorgang ist in Fig. 3 veranschaulicht. Die Transportfolie 70 mit der Unterlage 50 und dem darauf befindlichen elektronischen Datenträger 30 wird dabei so über die Unterseite der Transportkarte 10 ausgerichtet, daß durch das Abrollen der verwendeten Rolle bzw. wie in Fig. 3 angedeutet, durch die Bewegung einer Walze 80 zunächst die Unterlage 50 auf die Unterseite der Transportkarte, danach eine erste Innenkante des elektronischen Datenträgers 30 in den Durchbruch 20, danach der übrige Kartenkörper des elektronischen Datenträgers 30 in den Durchbruch 20 und schließlich der abgewandte überstehende Teil der Unterlage 50 auf die Oberfläche der Transportfolie 70 gedrückt wird. Durch die auf der Transportfolie 70 aufgebrachte Klebeschicht haftet die Transportfolie 70 in den dem Durchbruch 20 benachbarten Bereichen, in denen sie auf ihr aufliegt, auf der Transportkarte 10. Während oder nach dem Aufbringen der Unterlage 50 mit dem elektronischen Datenträger 30 auf die Transportkarte 10 wird die Transportfolie 70 von der Unterlage 50 entfernt. Die in die Öffnung weisende Oberfläche 52 der Unterlage 50 bildet den Grund einer durch das Aufbringen der Unterlage 50 aus dem Durchbruch geschaffenen Ausnehmung 20 in der Transportkarte 10.

Es entsteht danach eine Anordnung aus einer Transportkarte mit einer Ausnehmung 20, in die ein elektronischer Datenträger 30 eingesetzt ist. Figur 4 a zeigt eine Draufsicht auf die Oberseite 12 der Transportkarte 10. Von dieser Seite ist der elektronische Datenträger 30 zu erkennen, der unter Belassung eines umlaufenden Spaltes 46 zwischen dem Außenrand 44 des elektronischen Datenträgers 44 und dem Innenrand 22 des Durchbruchs 20 in der Ausnehmung 20 sitzt. Fig. 4b zeigt eine Aufsicht auf die Unterseite 14 derselben Transportkarte 10, in der nur die auf die Transportkarte 10 übertragene Unterlage 50 zu erkennen ist, die die Öffnung des Durchbruchs 20 vollständig überdeckt.

Die sichtbare Oberfläche 18 des elektronischen Datenträgers 30 fluchtet im eingesetzten Zustand genau mit der Oberseite der Transportkarte 10, bzw. fluchtet mit dieser mit einer im Rahmen einer vorgegebenen Toleranz liegenden Genauigkeit, so daß die sichtbare Oberfläche 18 des elektronischen Datenträgers und die Oberfläche 12 der Transportkarte 10 bis auf den Einbauspalt 46 eine homogene plane Fläche bilden. Die aus der Transportkarte 10 und dem darin eingesetzten elektronischen Datenträger 30 bestehende Anordnung kann einer Bearbeitung in einer auf das Format der Transportkarte 10 ausgerichteten Maschine zugeführt werden. Ebenso kann sie an Endnutzer abgegeben werden, die den elektronischen Datenträger 30 von der Transportkarte 10 trennen.

Die Haftung des elektronischen Datenträgers 30 auf dem Grund der Ausnehmung ist so bemessen, daß der elektronische Datenträger 30 manuell ohne weiteres aus der Ausnehmung 20 entfernbar ist. Das Entfernen geschieht vorzugsweise wiederum durch eine Abrollbewegung, wobei der biegsame elektronische Datenträger 30 zunächst an einer Kante angehoben und nachfolgend aus der Ebene der Transportkarte 10 herausgebogen wird. Das Anheben wird durch die Griffmulde 28, soweit vorhanden, unterstützt. Beim Lösen des elektronischen Datenträgers 30 aus der Ausnehmung 20 trennt sich vorzugsweise die Schutzschicht 48 von dem Grund der Ausnehmung 20. Entsprechend ist die Haftung zwischen der selbsthaftenden Schicht 40 des elektronischen Datenträgers 30 und der Schutzschicht 48 zweckmäßig größer als die Haftung zwischen der Schutzschicht 48 und dem Grund 52 der Ausnehmung 20. In einem folgenden Schritt nach dem Trennen von der Transportkarte 10 kann ein Nutzer dann die Schutzschicht 48 von der selbsthaftenden Schicht 40 des elektronischen Datenträgers 30 entfernen. Der elektronische Datenträger 30 kann anschließend an einem Gegenstand durch Ankleben befestigt werden. In einer Variante kann die Haftung zwischen der selbsthaftenden Schicht 40 des elektronischen Datenträgers 30 und der Schutzschicht 48 auch kleiner sein als die Haftung zwischen der Schutzschicht 48 und dem Grund 52 der Ausnehmung 20, so daß die Schutzschicht 48 beim Herausnehmen des elektronische Datenträgers 30 in der Ausnehmung verbleibt und die selbsthaftende Schicht 40 freiliegt. Der elektronische Datenträger 30 kann dann unmittelbar an einem Gegenstand befestigt werden.

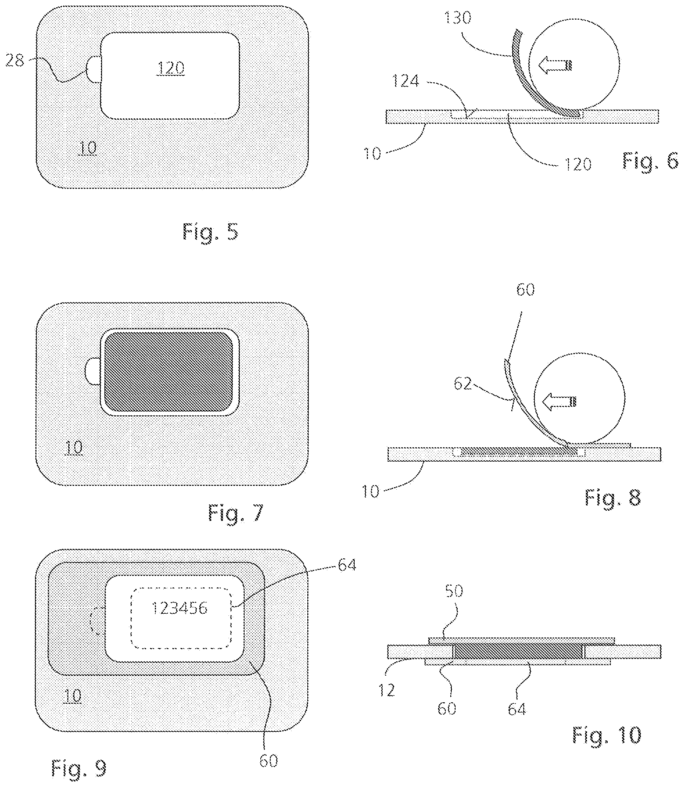

In einer Variante des vorbeschriebenen ersten Ausführungsbeispiels wird die Ausnehmung 120 in der Transportkarte 10 nicht durch Anlegen eines Durchbruches 20 und nachfolgendes Verschließen mittels einer Unterlage 50 erzielt, sondern als einteiliger Bestandteil der Transportkarte 10 angelegt. Die Variante ist in Fig. 5 veranschaulicht. Das Anlegen der Ausnehmung 120 kann z.B. erfolgen, indem zunächst ein Kartenkörper bereitgestellt und darin die Ausnehmung 120 ausgefräst wird, oder indem ein Kartenkörper mit einer Ausnehmung 120 z.B. mittels einer Form spritzgegossen wird. Auch kann die Ausnehmung 120 durch Vorabverbinden, z.B. Laminieren, von zwei Teilschichten, von denen eine einen Durchbruch aufweist und die andere durchgehend ausgeführt ist, hergestellt sein. Möglich ist es weiter, zwei durchgehende Teilschichten unter Zwischenlage einer Trennschicht im Bereich der späteren Ausnehmung vorab zu verbinden und den über der Trennschicht liegenden Bereich der Teilschicht anschließend auszustanzen oder auszuschneiden. Die Tiefe der Ausnehmung 120 bzw. die Dicke eines darin eingesetzten elektronischen Datenträgers 30 sind so bemessen, daß die sichtbare Oberfläche 18 eines in die Ausnehmung eingesetzten elektronischen Datenträgers 10 und die Oberseite 12 der Transportkarte 10 exakt fluchten bzw. im Rahmen einer vorgegebenen Genauigkeit miteinander fluchten.

Der elektronische Datenträger 30 wird, wie in Fig. 6 dargestellt, wiederum zweckmäßig auf einer Rolle 80 bereitgestellt oder mit Hilfe einer Walze in die Ausnehmung 120 eingebracht. Der elektronische Datenträger 30 wird dabei grundsätzlich auf dieselbe Weise, wie im ersten Ausführungsbeispiel beschrieben, in die Ausnehmung 120 abgerollt, wobei er sich von der eingesetzten Rolle 80 bzw. Transportunterlage löst. Anders als im ersten Ausführungsbeispiel kommt eine Unterlage 50 nun nicht zum Einsatz. In einer Variante ist vorgesehen, daß der Grund 124 der Ausnehmung 120 mit einer leicht haftenden Klebeschicht versehen ist, so daß der elektronische Datenträger 30 daran anhaftet. Alternativ hierzu kann die Schutzschicht 40 des elektronischen Datenträgers 30 zum Grund der Ausnehmung 120 hin mit einer Klebeschicht versehen sein, so daß der elektronische Datenträger 30 in der Ausnehmung 120 haftet. Eine Klebeschicht ist jedoch in jedem Fall optional.

Fig. 7 zeigt die nach Einbringen des elektronischen Datenträgers 30 in die Ausnehmung 120 entstehende Datenträgeranordnung in einer Aufsicht auf die Oberseite bzw. die sichtbare Oberfläche 18 des elektronischen Datenträgers 30. Der elektronische Datenträger 30 sitzt wiederum unter Belassung eines umlaufenden Randspaltes 46 in der Ausnehmung 120, wobei die sichtbare Oberfläche 18 des elektronischen Datenträgers und die Oberseite 12 der Transportkarte 10 miteinander fluchten.

Auf die so geschaffene Anordnung wird nachfolgend, wie in Fig. 8 veranschaulicht, eine Abdeckung 60 aufgebracht. Die Abdeckung 60 wird zweckmäßig in Form einer Folie auf einer Rolle bereitgestellt und von dieser über die Datenträgeranordnung abgerollt. Die Abdeckung 60 ist selbsthaftend. Sie ist hierzu zur Oberseite 12 der Transportkarte 10 bzw. zur sichtbaren Oberfläche 18 des elektronischen Datenträgers 30 hin mit einer Klebeschicht versehen, deren Klebkraft so dimensioniert ist, daß die Abdeckung 60 später von einem Nutzer ohne weiteres wieder abgezogen werden kann. Die Abdeckung 60 ist größer als die Öffnung der Ausnehmung 120 und fixiert den elektronischen Datenträger 30 in der Ausnehmung 120.

Wie in Fig. 9 gezeigt, ist die Abdeckung 60 zweckmäßig so gestaltet, daß sie den Randbereich des elektronischen Datenträgers 30, den Spalt 46 sowie einen die Ausnehmungsöffnung umgebenden Bereich auf der Oberseite 12 der Transportkarte 10 abdeckt, der innere Bereich der Oberfläche des elektronischen Datenträgers jedoch frei bleibt. Durch das freigelassene Fenster 64 kann die Oberfläche 12 des elektronischen Datenträgers 30 direkt erreicht und bearbeitet werden. Beispielsweise können durch das Fenster 64 in einer Personalisierungsanlage durch Drucken oder Lasern alphanumerische Zeichen auf die sichtbare Oberfläche 18 aufgebracht werden. Das Aufbringen der Abdeckung 60 kann selbstverständlich auch zusammen mit dem Einbringen des elektronischen Datenträgers 30 in die Ausnehmung 120 in einem Arbeitsgang erfolgen. Abdeckung 60 und elektronischer Datenträger 30 müssen hierzu nur auf einer entsprechend vorbereiteten Rolle gemeinsam zur Verfügung gestellt werden.

Die in Fig. 9 gezeigte Datenträgeranordnung kann wie die Datenträgeranordnung gemäß dem ersten Ausführungsbeispiel einer Bearbeitung in einer auf das Format der Transportkarte 10 ausgerichteten Maschine zugeführt und ohne weitere Veränderung auch weiter an einen Endnutzer übergeben werden. Dieser löst, um den elektronischen Datenträger 30 einsetzen zu können, die Abdeckung 60 von der Transportkarte 10 und trennt anschließend den elektronischen Datenträger 30 von der Abdeckung 60. Die Haftung zwischen der Schutzschicht 48 und der Abdeckung 60 ist dabei geringer bemessen als die Haftung zwischen der Schutzschicht 48 und der selbsthaftenden Schicht 40 des elektronischen Datenträgers 30. In einem abschließenden Schritt entfernt der Endnutzer die Schutzschicht 48 von der selbsthaftenden Schicht 40 an dem elektronische Datenträger 30, der danach an einem Gegenstand befestigt werden kann. In einer Variante kann die Haftung zwischen Schutzschicht 48 und Abdeckung 60 größer bemessen sein als die Haftung zwischen der Schutzschicht 48 und selbsthaftender Schicht, so daß nach dem Trennen des elektronischen Datenträgers 30 von der Abdeckung 60 die selbsthaftende Schicht 40 offenliegt und der elektronische Datenträger 30 unmittelbar an einem Gegenstand befestigt werden kann.

Die beiden Ausführungsbeispiele können auch teilweise kombiniert werden. So kann, wie in Fig. 10 gezeigt, eine Abdeckung 60 auch für eine Datenträgeranordnung verwendet werden, wie sie in Fig. 4 dargestellt ist. Die Abdeckung 60 wird, wiederum vorzugsweise durch Rollen, auf die Vorderseite 12 der Transportkarte 10 aufgebracht, so daß der Restspalt 46 zwischen elektronischem Datenträger 30 und Durchbruch 20 vollständig verschlossen ist. Durch das Fenster 64 kann wiederum eine direkte Bearbeitung der sichtbaren Oberfläche 18 des elektronischen Datenträgers 30 erfolgen, um ihn etwa optisch zu personalisieren. Die Haftung zwischen Abdeckung 60 und sichtbarer Oberfläche 18 kann bei dieser Ausführungsform nach Wunsch des Herstellers der Datenträgeranordnung wahlweise so eingestellt werden, daß der elektronische Datenträger beim Lösen von der Transportkarte 10 entweder an der Unterlage 50 oder an der Abdeckung 60 haftet.

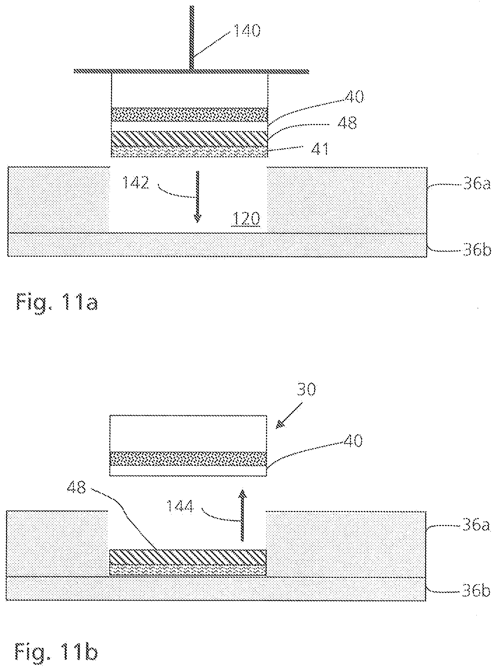

Alternativ zum Bereitstellen auf einer Walze und Abrollen in eine Ausnehmung 20,120 kann, wie in Fig. 11a veranschaulicht, der elektronische Datenträger 30 auch mittels eines Manipulators 140 in einer linearen Bewegung in die Ausnehmung 20,120 in der Transportkarte 10 eingesetzt werden. In einfacher Ausführung geschieht das Einsetzen, wie durch den Pfeil 142 angedeutet, senkrecht von oben. Ohne weiteres sind aber andere Bewegungsabläufe möglich. Beispielsweise kann der elektronische Datenträger 30 zunächst an einer Kante aufgesetzt und anschließend über die Kante abgekippt werden. Das Abkippen kann dabei auch in ein Abrollen übergehen. Vorzugsweise ist die Ausnehmung 120 vom vorangelegten Typ wie in Fig. 5 gezeigt. Zweckmäßig besitzt der elektronische Datenträger 30 dabei, wie in Fig. 11 angedeutet, einen zweischichtigen Aufbau mit zwei Teilschichten 36a, 36b, wobei eine sehr dünn ausgeführte Teilschicht 36b durchgehend ist und die andere, im Vergleich sehr dicke Teilschicht 36a einen Durchbruch enthält, so daß beide im zusammengefügten Zustand die Ausnehmung 120 formen. Typischerweise ist die Dicke des elektronischen Datenträgers 30 etwas größer als die Tiefe der Ausnehmung 120, so daß der elektronische Datenträger 30 die Oberfläche der Transportkarte10 leicht überragt und damit seine Separierbarkeit anzeigt. Der elektronische Datenträger 30 besitzt im übrigen zweckmäßig einen Schichtaufbau wie in Fig. 1a veranschaulicht, wobei unter der Schutzschicht 48 zusätzlich noch eine zweite selbsthaftende Schicht 41 vorgesehen ist. Die zweite selbsthaftende Schicht 41 haftet stärker als die erste selbsthaftende Schicht 40. Die Haftung zwischen der Schutzschicht 48 und dem Grund 124 der Ausnehmung 120 ist dadurch stärker als die Haftung zwischen der Schutzschicht 48 und der ersten selbsthaftenden Schicht 40. Beim Lösen des Datenträgers 30 aus der Ausnehmung 120, wie in Fig. 11b durch den Pfeil 144 angedeutet, verbleibt daher die Schutzschicht 48 in der Ausnehmung 120 und der elektronischen Datenträger 30 kann mittels der freiliegenden selbsthaftenden Schicht 40 unmittelbar an einem Gegenstand befestigt werden.

## Patentansprüche

1. Datenträgeranordnung bestehend aus einem steifen, flachen Träger (10) mit einer zur Oberseite (12) des Trägers (10) hin offenen Ausnehmung (20) und einem in der Ausnehmung (20,120) lösbar gelagerten, ebenfalls flachen elektronischen Datenträger (30) mit einem integrierten Schaltkreis (32), **dadurch gekennzeichnet, daß**
der elektronische Datenträger (30) flexibel ist und eine größere Biegsamkeit aufweist als der Träger (10), so daß er durch ein Abrollen aus der Ausnehmung (20,120) entfernbar ist,
der elektronische Datenträger (30) unter Belassung eines umlaufenden Spaltes (46) zwischen dem Außenrand (44) des elektronischen Datenträgers (30) und dem Innenrand (22) der Ausnehmung (20) in der Ausnehmung (20) gelagert ist, und der elektronische Datenträger (30) eine selbsthaftende Schicht (40) aufweist,
die, während der elektronische Datenträger (30) in der Ausnehmung (20) gelagert ist, zur Befestigung an dem Träger (10) dient,
und die nach dem Entfernen des elektronischen Datenträgers (30) aus der Ausnehmung (20) ein Mittel (40) zur Befestigung an einem Gegenstand bildet.

2. Anordnung nach Anspruch 1, **dadurch gekennzeichnet, daß** die sichtbare Oberfläche (18) des elektronischen Datenträgers (30) mit einer innerhalb einer vorgegebenen Toleranz liegenden Genauigkeit mit der die Öffnung der Ausnehmung (20,120) einfassenden Oberfläche des Trägers (10) fluchtet, so daß ein aus Träger (10) und Datenträger (30) bestehendes Ensemble in Maschinen gehandhabt und bearbeitet werden kann, die eigentlich zur Verarbeitung von Datenträgern mit den Abmessungen eines Trägers (10) eingerichtet sind.

3. Anordnung nach Anspruch 1, **dadurch gekennzeichnet, daß** der elektronische Datenträger (30) mit der selbsthaftenden Schicht (40) oder mit einer zweiten selbsthaftenden Schicht (41) am Grund der Ausnehmung (20,120) befestigt ist.

4. Anordnung nach Anspruch 1, **dadurch gekennzeichnet, daß** die selbsthaftende Schicht (40) durch eine entfernbare Schutzschicht (48) abgedeckt ist, der Grund (52) der Ausnehmung (20) haftend ausgeführt und der elektronische Datenträger (30) mit der Schutzschicht (48) daran befestigt ist.

5. Anordnung nach Anspruch 1, **dadurch gekennzeichnet, daß** die selbsthaftende Schicht (40) durch eine entfernbare Schutzschicht (48) und diese durch eine zweite selbsthaftende Schicht (41) abgedeckt ist.

6. Anordnung nach Anspruch 4 oder 5, **dadurch gekennzeichnet, daß** die Haftung zwischen der Schutzschicht (48) und dem Grund der Ausnehmung (20) bzw. die Haftung zwischen der Schutzschicht (48) und der zweiten selbsthaftenden Schicht (41) geringer ist als die Haftung zwischen der Schutzschicht (48) und der selbsthaftenden Schicht (40).

7. Anordnung nach Anspruch 4 o der 5, **dadurch gekennzeichnet, daß** die Haftung zwischen der Schutzschicht (48) und dem Grund (52) der Ausnehmung (20,120) bzw. die Haftung zwischen der zweiten selbsthaftenden Schicht (41) und dem Grund (124) der Ausnehmung (120) größer ist als die Haftung zwischen der Schutzschicht (48) und der selbstklebenden Schicht (40).

8. Anordnung nach Anspruch 1, **dadurch gekennzeichnet, daß** über die Ausnehmung (20) und die sichtbare Oberseite (18) des elektronischen Datenträgers (30) eine Abdeckung (60) aufgebracht ist, die größer ist als die Öffnung der Ausnehmung (20) und die einen Teil der sichtbaren Oberfläche (18) des elektronischen Datenträgers (30) freiläßt.

9. Anordnung nach Anspruch 1, **dadurch gekennzeichnet, daß** am Rand der Ausnehmung (20,120) eine Griffmulde (28) ausgebildet ist.

10. Verfahren zur Herstellung einer Datenträgeranordnung bestehend aus einem steifen, flachen Träger mit einer Ausnehmung und einem in der Ausnehmung lösbar gelagerten, ebenfalls flachen elektronischen Datenträger, der einen IC sowie Mittel zur Befestigung an einem Gegenstand aufweist, **gekennzeichnet durch** folgende Schritte:
Bereitstellen des Trägers (10);
Ausbilden eines Durchbruchs (20) in dem Träger (10);
Bereitstellen eines biegsam ausgebildeten elektronischen Datenträgers (30) auf einer flexiblen Unterlage (50), die größer ist als der Durchbruch (20) und die auf der den elektronischen Datenträger (30) tragenden Seite (52) haftet, Abrollen der Unterlage (50) über den Durchbruch (20) derart, daß der elektronische Datenträger (30) darin zu liegen kommt und die Unterlage (50) fest an dem Träger (10) anhaftet, um den Grund (52) der Ausnehmung (20) zu bilden, wobei der elektronischen Datenträger (30) an der von seiner sichtbaren Oberfläche (18) abgewandten Unterseite eine selbsthaftende Schicht (40) aufweist, welche zur Befestigung des elektronischen Datenträgers (30) an dem Träger (10) dient und nach dem Lösen des elektronischen Datenträgers (30) aus der Ausnehmung (20) das Mittel (40) zur Befestigung an einem Gegenstand bildet..

11. Verfahren zur Herstellung einer Datenträgeranordnung bestehend aus einem steifen, flachen Träger mit einer Ausnehmung und einem in der Ausnehmung lösbar gelagerten, ebenfalls flachen elektronischen Datenträger, der einen integrierten Schaltkreis (32) sowie Mittel (40) zur Befestigung an einem Gegenstand aufweist, **gekennzeichnet durch** folgende Schritte:
Bereitstellen des Trägers (10);
Ausbilden einer Ausnehmung (120) in dem Träger (10);
Bereitstellen eines biegsam gefertigten elektronischen Datenträgers (30), der an der von seiner sichtbaren Oberfläche (18) abgewandten Unterseite eine selbsthaftende Schicht (40) aufweist, welche zur Befestigung des elektronischen Datenträgers (30) an dem Träger (10) dient und nach dem Lösen des elektronischen Datenträgers (30) aus der Ausnehmung (20) das Mittel (40) zur Befestigung an einem Gegenstand bildet,
Einsetzen des elektronischen Datenträgers (30) in die Ausnehmung (120) derart, daß die Unterseite mit der selbsthaftenden Schicht (40, 41) auf dem Grund (124) der Ausnehmung (120) zu liegen kommt und die sichtbare Oberfläche (18) zur Öffnung der Ausnehmung (120) hinweist.

12. Verfahren nach Anspruch 11, **dadurch gekennzeichnet, daß** das Einsetzen des elektronischen Datenträgers (30) durch ein Abrollen über die Ausnehmung (120) erfolgt.

13. Verfahren nach einem der Ansprüche 10 bis 12, **dadurch gekennzeichnet, daß** nach Einbringen des elektronischen Datenträgers (30) in die Ausnehmung (20,120) über diese eine selbsthaftende Abdeckung (60) aufgebracht wird.

14. Verfahren nach Anspruch 11, **dadurch gekennzeichnet, daß** auf die Unterseite des elektronischen Datenträgers (30) eine erste selbsthaftende Schicht (40), darauf eine Schutzschicht (48) und darauf eine zweite selbsthaftende Schicht (41) aufgebracht wird, wobei die zweite selbsthaftende Schicht (41) stärker haftet als die erste.

15. Verfahren nach Anspruch 11, **dadurch gekennzeichnet, daß** auf dem Grund (124) der Ausnehmung (120) eine haftende Schicht bereitgestellt wird.

16. Verfahren nach Anspruch 10 oder 11, **dadurch gekennzeichnet, daß** die Tiefe der Ausnehmung (20,120) so gestaltet wird, daß die sichtbare Oberfläche (18) des elektronischen Datenträgers (30) mit einer innerhalb einer vorgegebenen Toleranz liegenden Genauigkeit mit der die Ausnehmung (120) einfassenden Oberfläche (12) des Trägers (10) fluchtet, so daß ein aus Träger (10) und Datenträger (30) bestehendes Ensemble in Maschinen gehandhabt und bearbeitet werden kann, die eigentlich zur Verarbeitung von Datenträgern mit den Abmessungen eines Trägers (10) eingerichtet sind.

## Claims

1. A data carrier configuration consisting of a rigid, flat carrier (10) having a recess (20) which is open toward the upper side (12) of the carrier (10) and an electronic data carrier (30) which is detachably mounted in the recess (20, 120) and is likewise flat, said electronic data carrier having an integrated circuit (32), **characterized in that**
the electronic data carrier (30) is flexible and has a greater pliability than the carrier (10), so that it is removable from the recess (20, 120) by being unrolled,
the electronic data carrier (30) is mounted in the recess (20) while leaving a circumferential gap (46) between the outer edge (44) of the electronic data carrier (30) and the inner edge (22) of the recess (20), and the electronic data carrier (30) has a self-adhesive layer (40), which serves for attachment to the carrier (10) while the electronic data carrier (30) is mounted in the recess (20),
and which forms a means (40) for attachment to an object after the removal of the electronic data carrier (30) from the recess (20).

2. The configuration according to claim 1, **characterized in that** the visible surface (18) of the electronic data carrier (30) is aligned with a surface of the carrier (10) encompassing the opening of the recess (20, 120) with a precision within a predefined tolerance, so that an ensemble consisting of the carrier (10) and the electronic data carrier (30) can be handled and processed in machines which are actually adapted for processing data carriers having the dimensions of a carrier (10).

3. The configuration according to claim 1, **characterized in that** the electronic data carrier (30) is attached to the base of the recess (20, 120) using the self-adhesive layer (40) or a second self-adhesive layer (41).

4. The configuration according to claim 1, **characterized in that** the self-adhesive layer (40) is covered by a removable protective layer (48), the base (52) of the recess (20) is executed adhesively, and the electronic data carrier (30) with the protective layer (48) is attached thereto.

5. The configuration according to claim 1, **characterized in that** the self-adhesive layer (40) is covered by a removable protective layer (48) and said protective layer is covered by a second self-adhesive layer (41).

6. The configuration according to claim 4 or 5, **characterized in that** the adhesion between the protective layer (48) and the base of the recess (20) and/or the adhesion between the protective layer (48) and the second self-adhesive layer (41) is smaller than the adhesion between the protective layer (48) and the self-adhesive layer (40).

7. The configuration according to claim 4 or 5, **characterized in that** the adhesion between the protective layer (48) and the base (52) of the recess (20, 120) and/or the adhesion between the second self-adhesive layer (41) and the base (124) of the recess (120) is greater than the adhesion between the protective layer (48) and the self-adhesive layer (40).

8. The configuration according to claim 1, **characterized in that in that** a cover (60) is applied over the recess (20) and the visible upper side (18) of the electronic data carrier (30), which is larger than the opening of the recess (20) and leaves a part of the visible surface (18) of the electronic data carrier (30) exposed.

9. The configuration according to claim 1, **characterized in that** a grip indentation (28) is formed on the edge of the recess (20, 120).

10. A method for manufacturing a data carrier configuration consisting of a rigid, flat carrier with a recess and an electronic data carrier, which is detachably mounted in the recess and is likewise flat, and which has an IC and means for attachment to an object, **characterized by** the following steps of:
making available the carrier (10);
forming a through opening (20) in the carrier (10); making available a pliably configured electronic data carrier (30) on a flexible underlay (50), which is larger than the through opening (20) and which adheres on the side (52) carrying the electronic data carrier (30), unrolling the underlay (50) over the through opening (20) in such a manner that the electronic data carrier (30) comes to rest therein and the underlay (50) adheres fixedly to the carrier (10), in order to form the base (52) of the recess (20), wherein the electronic data carrier (30) has a self-adhesive layer (40) on its lower side facing away from its visible surface (18), said self-adhesive layer serving for attachment of the electronic data carrier (30) to the carrier (10) and forming the means (40) for attachment to an object after the detachment of the electronic data carrier (30) from the recess (20).

11. A method for manufacturing a data carrier configuration consisting of a rigid, flat carrier with a recess and an electronic data carrier, which is detachably mounted in the recess and is likewise flat, and which has an integrated circuit (32) and means (40) for attachment to an object, **characterized by** the following steps of:
making available the carrier (10)
forming a recess (120) in the carrier (10);
making available a pliably produced electronic data carrier (30) having a self-adhesive layer (40) on the lower side facing away from its visible surface (18), said self-adhesive layer serving for attachment of the electronic data carrier (30) to the carrier (10) and forming the means (40) for attachment to an object after the detachment of the electronic data carrier (30) from the recess (20),
inserting the electronic data carrier (30) in the recess (120) in such a manner that the lower side with the self-adhesive layer (40, 41) comes to rest on the base (124) of the recess (120) and the visible surface (18) points to the opening of the recess (120).

12. The method according to claim 11, **characterized in that** the insertion of the electronic data carrier (30) is effected by unrolling over the recess (120).

13. The method according to any of the claims 10 to 12, **characterized in that** after introduction of the electronic data carrier (30) into the recess (20, 120) a self-adhesive cover (60) is applied thereover.

14. The method according to claim 11, **characterized in that** a first self-adhesive layer (40) is applied to the lower side of the electronic data carrier (30), a protective layer (48) is applied thereon, and a second self-adhesive layer (41) is applied thereon again, wherein the adhesion of the second self-adhesive layer (41) is greater than the adhesion of the first one.

15. The method according to claim 11, **characterized in that** an adhesive layer is made available on the base (124) of the recess (120).

16. The method according to claim 10 or 11, **characterized in that** the depth of the recess (20, 120) is configured so that the visible surface (18) of the electronic data carrier (30) is aligned with the surface (12) of the carrier (10) which encompasses the recess (120) with a precision lying within a predefined tolerance, so that an ensemble consisting of the carrier (10) and the data carrier (30) can be handled and processed in machines which are actually adapted for processing data carriers having the dimensions of a carrier (10).

## Revendications

1. Agencement de support de données consistant en un support (10) rigide plat ayant un évidement (20) ouvert vers la face de dessus (12) du support (10) et en un support de données électronique (30) plat lui aussi, logé de manière amovible dans l'évidement (20, 120) et doté d'un circuit intégré (32),
**caractérisé en ce que**
le support de données électronique (30) est flexible et présente une plus grande souplesse que le support (10), de telle façon qu'il peut, par déroulement, être enlevé de l'évidement (20, 120),
le support de données électronique (30) est, en laissant une fente (46) périphérique entre le bord extérieur (44) du support de données électronique (30) et le bord intérieur (22) de l'évidement (20), logé dans l'évidement (20), et le support de données électronique (30) comporte une couche auto-adhésive (40)
qui, pendant que le support de données électronique (30) est logé dans l'évidement (20), sert à la fixation au support (10),
et qui, après l'enlèvement du support de données électronique (30) de l'évidement (20), constitue un moyen (40) de fixation à un objet.

2. Agencement selon la revendication 1, **caractérisé en ce que** la surface visible (18) du support de données électronique (30) est alignée, avec une précision située à l'intérieur d'une tolérance prédéterminée, avec la surface du support (10) encadrant l'ouverture de l'évidement (20, 120), de telle façon qu'un ensemble consistant en un support (10) et un support de données (30) peut être manipulé et traité dans des machines qui sont en fait conçues pour le traitement de supports de données ayant les dimensions d'un support (10).

3. Agencement selon la revendication 1, **caractérisé en ce que** le support de données électronique (30) est fixé avec la couche auto-adhésive (40) ou avec une deuxième couche auto-adhésive (41) au fond de l'évidement (20, 120).

4. Agencement selon la revendication 1, **caractérisé en ce que** la couche auto-adhésive (40) est recouverte par une couche de protection (48) pouvant être enlevée, **en ce que** le fond (52) de l'évidement (20) est réalisé sous forme adhésive, et **en ce que** le support de données électronique (30) y est fixé avec la couche de protection (48).

5. Agencement selon la revendication 1, **caractérisé en ce que** la couche auto-adhésive (40) est recouverte par une couche de protection (48) pouvant être enlevée, **en ce que** cette dernière est recouverte par une deuxième couche auto-adhésive (41).

6. Agencement selon la revendication 4 ou 5, **caractérisé en ce que** l'adhérence entre la couche de protection (48) et le fond de l'évidement (20) ou bien l'adhérence entre la couche de protection (48) et la deuxième couche auto-adhésive (41) est plus faible que l'adhérence entre la couche de protection (48) et la couche auto-adhésive (40).

7. Agencement selon la revendication 4 ou 5, **caractérisé en ce que** l'adhérence entre la couche de protection (48) et le fond (52) de l'évidement (20, 120) ou bien l'adhérence entre la deuxième couche auto-adhésive (41) et le fond (124) de l'évidement (120) est plus forte que l'adhérence entre la couche de protection (48) et la couche auto-adhésive (40).

8. Agencement selon la revendication 1, **caractérisé en ce que**, par dessus l'évidement (20) et la face de dessus (18) visible du support de données électronique (30), un recouvrement (60) est appliqué, lequel est plus grand que l'ouverture de l'évidement (20) et laisse libre une partie de la surface (18) visible du support de données électronique (30).

9. Agencement selon la revendication 1, **caractérisé en ce que**, au bord de l'évidement (20, 120), un creux de préhension (28) est réalisé.

10. Procédé de fabrication d'un agencement de support de données consistant en un support rigide plat ayant un évidement et en un support de données électronique plat lui aussi, logé de manière amovible dans l'évidement et doté d'un CI ainsi que de moyens de fixation à un objet, **caractérisé par** les étapes suivantes :
Mise à disposition du support (10),
Génération d'un percement (20) dans le support (10),
Mise à disposition d'un support de données électronique (30) souple sur un fondement (50) flexible qui est plus grand que le percement (20) et qui adhère du côté (52) portant le support de données électronique (30),
Déroulement du fondement (50) sur l'emplacement du percement (20), de telle façon que le support de données électronique (30) vient s'y loger et que le fondement (50) adhère au support (10) afin de constituer le fond (52) de l'évidement (20), cependant que le support de données électronique (30) comporte, sur la face de dessous tournée à l'opposé de la la surface visible (18), une couche auto-adhésive (40) qui sert à la fixation du support de données électronique (30) au support (10) et constitue, après le retirement du support de données électronique (30) de l'évidement (20), le moyen (40) de fixation à un objet.

11. Procédé de fabrication d'un agencement de support de données consistant en un support rigide plat ayant un évidement et en un support de données électronique plat lui aussi, logé de manière amovible dans l'évidement et doté d'un circuit électronique (32) ainsi que de moyens (40) de fixation à un objet, **caractérisé par** les étapes suivantes :
Mise à disposition du support (10),
Génération d'un évidement (120) dans le support (10),
Mise à disposition d'un support de données électronique (30) usiné sous forme souple, lequel, sur la face de dessous tournée à l'opposé de la surface visible (18), comporte une couche auto-adhésive (40) qui sert à la fixation du support de données électronique (30) au support (10) et qui, après le retirement du support de données électronique (30) de l'évidement (20), constitue le moyen (40) de fixation à un objet,
insertion du support de données électronique (30) dans l'évidement (120), de telle façon que la face de dessous comportant la couche auto-adhésive (40, 41) vient se loger sur le fond (124) de l'évidement (120) et que la surface visible (18) est tournée vers l'ouverture de l'évidement (120).

12. Procédé selon la revendication 11, **caractérisé en ce que** l'insertion du support de données électronique (30) a lieu par un déroulement sur l'emplacement de l'évidement (120).

13. Procédé selon une des revendications de 10 à 12, **caractérisé en ce que**, après l'introduction du support de données électronique (30) dans l'évidement (20, 120), par dessus ce dernier, un recouvrement (60) auto-adhésif est appliqué.

14. Procédé selon la revendication 11, **caractérisé en ce que**, sur la face de dessous du support de données électronique (30), une première couche auto-adhésive (40) est appliquée, par dessus laquelle une couche de protection (48), et, par dessus cette dernière, une deuxième couche auto-adhésive (41) est appliquée, cependant que la deuxième couche auto-adhésive (41) adhère plus fortement que la première.

15. Procédé selon la revendication 11, **caractérisé en ce que**, sur le fond (124) de l'évidement (120), une couche adhésive est mise à disposition.

16. Procédé selon la revendication 10 ou 11, **caractérisé en ce que** la profondeur de l'évidement (20, 120) est réalisée de telle façon que la surface visible (18) du support de données électronique (30) est alignée, avec une précision située à l'intérieur d'une tolérance prédéterminée, avec la surface (12) du support (10) encadrant l'évidement (120), de telle façon qu'un ensemble consistant en un support (10) et un support de données (30) peut être manipulé et traité dans des machines qui sont en fait conçues pour le traitement de supports de données ayant les dimensions d'un support (10).
